# EUROPEAN PATENT APPLICATION

(11) **EP 1 452 241 A1**
(43) Date of publication of application: **01.09.2004**
(21) Application number: 04075938.3
(22) Date of filing: 19.11.2000
(51) Int. Cl.: B05D 3/02, B05D 7/00

(54) **Durable metallic materials**

(30) Priority: 19.11.1999 GB 9927260
(62) Divisional of application: 00979741.6
(71) Applicant: Corus UK Limited, London W1F 2AS (GB)
(72) Inventor: Parsons, John Henry, Wootton Bassett Wiltshire SN4 7ER (GB); Busby, Nicholas James, Abergavenny Gwent NP7 7ED (GB)
(74) Representative: Herman de Groot, Johan Willem

(57) **Abstract**

The invention provides a highly corrosion resistant metallic material with an aestetic shiny appearance. The material comprises a passivated steel substrate to which is bonded a surface coating comprising a substantially transparent film having incorporated thereon a top coating of a UV-cured resin, the resin providing a durable scratch resistant surface. A method is also provided for the manufacture of such a material. The material is particularly suited to use in damp, warm, corrosive environments such as kitchens and laundries.

## Description

The present invention relates to durable metallic materials. In particular, materials suitable for use in the manufacture of laundry and kitchen appliances and accessories.

Steels are known to be hard-wearing and structurally strong materials and are often used to provide the basis for a casing or framework for kitchen and laundry appliances and accessories both in the home and in hotels/restaurants. However, the surface of steels, when repeatedly subjected to a damp, warm or corrosive environment may be easily marked, stained or corroded.

To avoid these problems steels may be provided with a coating of a durable plastics material which is relatively inert and unaffected by damp, warm or corrosive environments. Such plastics are generally presented as high gloss white surfaces. Occasionally other coloured surfaces may be presented which may comprise around 5% coloured variations and metallic effects.

The shiny appearance of a polished metal surface is often seen as indicative of cleanliness, a very desirable appearance in a kitchen where foods are being prepared and stored and dishes and utensils washed, or, in a laundry where clothes are being cleaned and stored.

Particularly in kitchens where food is being prepared, it is important that the preparation surfaces and utensils do not contain any significant proportion of crevices or imperfections sufficiently large to retain or trap food particles or microbes which may transfer contaminants about the food preparation area or into the food. Thus, it is highly desirable to provide the appliances and/or utensils with a very smooth scratch-resistant surface that can conveniently be wiped clean.

Shiny, polished metallic surfaces are known, such surfaces being provided in the form of stainless steels. When polished, such steels provide a very desirable aesthetic appearance but at a considerable cost to manufacture. Additionally, such steels are often easily marked by sticky fingers or water. Attempts have been made to alleviate this marking problem by laminating the stainless steel with a mark-resistant coating. However, this adds to the price of an already expensive product, and such laminates have previously proven to be prone to delamiriation in a damp, warm or corrosive environment. This can be evidenced by standard testing procedures where the laminates are boiled in detergent solutions to simulate long term service in these types of environment. Also, the scratch resistance of laminated surfaces has not met with customer expectations.

It is possible to provide corrosion resistance to a carbon based steel by coating with a zinc or similar cathodic protection system, however such treatments affect the aesthetic appearance of the steel, the resultant surface being undesirably dull or opaque in appearance. The loss in aesthetic appeal can be remedied by using a textured polyester film on which is vapour deposited a shiny metallic surface, say aluminium, but this remedy again leads to a potential problem of delamination.

In accordance with the present invention, there is provided a method for the manufacture of a high performance metallic material comprising:
(i) inductively heating a metallic substrate material to between about 160°C and 210°C;
(ii) extruding a multi-layer composite film comprising a substantially transparent film and a bonding agent bottom layer with a UV-cured resin top layer.
(iii) applying the composite film of (ii) to the heated product of step (i) under pressure sufficient to initiate bonding of the bonding agent to the coated surface of the steel substrate; and
(iv) reheating the product of step (iii) to between about 180°C and 240°C for a time period sufficient to substantially complete the bonding of the bonding agent to the coated surface of the metallic substrate.

The UV-cured resin, which may comprise an epoxy or an acrylic resin, provides a smooth and scratch-resistant substantially transparent outer surface to the composite material. The performance of the scratch-resistant surface may be improved by the addition of one or more agents, for example mineral fillers or organic or inorganic slip agents designed to increase scratch resistance of the surface.

Optionally, a colorant may be added to any component layer of the surface coating to provide a different aesthetic appearance. Preferably, such a colorant will be added during the application of the surface coating. Colourants may be provided in the form of dyes or pigments carried in a solvent such as a ketone or other aromatic or aliphatic hydrocarbon. Preferably the colourants are mixed in with the liquid UV resin during manufacture of the composite film, the UV resin is rollcoated onto the transparent film and allowed to cure. The colours may be provided as a pattern or picture effect appearing on the surface of the resulting laminate.

The reheating of the substrate and surface coating to an elevated temperature provides good secondary melting of the bonding agent enhancing the bonding mechanism and providing improved bonding across the surface of the substrate. Desirably, this reheating is applied for between one and ten seconds at a maximum temperature which is below the temperature at which melting, distortion, or colorisation of the surface coating begins.

The component layers of the surface coating are ideally chosen so that the bonding agent melts at a temperature which is lower than the melting point of the ether components, and preferably the transparent film layer melts at a temperature below the melting point of the UV cured resin.

In the metallic materials made according to the present invention any corrosion of the laminate is generally restricted to exposed metal surfaces, which in this case is limited to cut edge of the multi-layered material. The bonded polymer coating provides protection against any under film corrosion thus preventing any damage or corrosion on the decorative surface.

The inventors have found that the exceptional bond provided by this two stage process provides a high performance metallic material with much greater corrosion resistance than previously existing materials of a similar type. The materials have a pleasing aesthetic appearance which can be easily maintained in practice, can be formed into complex shapes to accommodate various designs of appliance or accessory and show good corrosion performance in the damp, warm and corrosive conditions typically found in home laundries and kitchens.

Other applications of products made by this process include durable, aesthetically appealing materials for office furniture or car interiors. In such applications various colour effects may be provided in the surface coating, for example a polished wood effect.

Desirably, the heating process of step (i) is carried out at temperatures of above about 180°C but below 210°C. Desirably the heating process of step (iv) is carried out between about 200°C and 230°C, most desirably between about 210°C and 230°C.

In another aspect, the invention provides a high performance metallic material comprising; a metallic substrate to which is bonded a surface coating comprising a UV-cured resin top surface, a substantially transparent film and a bonding agent bottom layer, the bottom layer being bonded to the surface of the metallic substrate.

Suitable materials for the UV-cured resin include epoxy and acrylic resins. the transparent film is preferably of an extrudable plastics material, for example: polyethylene terephthalate (PET), polypropylene (PP) or polyvinyl chloride (PVC), most preferably is of PET. The transparent film may be simply cast or biaxially oriented.

The bonding agent is desirably polymeric and preferably is a polyester or polyolefin which may be in amorphous or crystalline form or a combination of those forms. A particularly preferred bonding agent is a co-extruded polyester co-polymer.

Optionally, the metallic substrate may be pre-treated to provide a more aesthetic or corrosion resistant surface, for example by electrolytic passivation techniques. Use of such a passivation technique greatly improves the durability of the metal/polymer bond.

Metallic materials according to the invention exhibit performance characteristics previously only experienced with cathodically protected steels, but unlike those steels are relatively inexpensive to manufacture and also exhibit a high sheen aesthetic appearance.

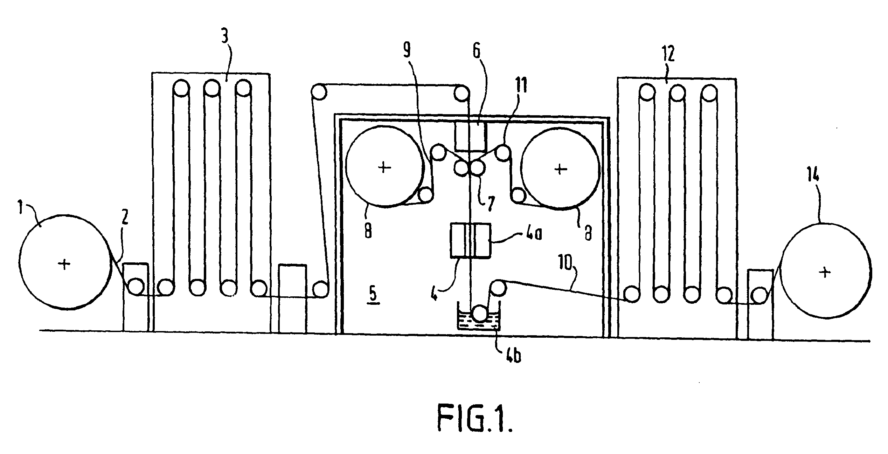

The invention will now be described by way of example only with reference to the accompanying diagrammatic drawings, in which Figure 1 illustrates typical apparatus for applying transparent polymer coatings to the surfaces of chromium/chromium oxide passivated steel strip in accordance with the invention.

The illustrated apparatus comprises a coil 1 of passivated steel strip 2 of a thickness of between 0.05mm and 0.5mm which is passed around an accumulator 3 before being guided by rolls into a coating chamber 5. As the strip 2 enters the chamber 5 it passes through an induction heater 6 which heats the strip to a temperature of approximately 200°C. Below the heater 6 are positioned two contra-rotating rolls 7. The rolls may have a polished or mirrored surface. This finish may be achieved by using chromium or chromium coated rolls. Alternatively, rolls of hard rubber (e.g. VITON) or rolls having hard rubber surfaces may be employed.

Coils 8 of transparent polypropylene or polyethylene terephthalate films 9 provided with a top coat of a UV-cured epoxy resin are positioned within the coating chamber 5. The thickness of the polymer films 9 is preferably between 5 and 100 microns, the thickness of the UV-cured resin coating is about 3 microns. A typical thickness for the composite polymer and UV-cured resin being 15 to 25 microns.

Each film is coated on one of its sides with a bonding layer. The bonding layer is on that side of the film which is intended to come into contact with the steel substrate. The bonding layer comprises any one of a number of substantially transparent polymers such as polyolefins or polyester.

The transparent films 9 are guided towards the heated strip by a laminator including a series of tensioning and spreading rolls 11 which ensure that the interfaces between the films 9 and the strip are free of creases, stress lines and defects.

Bonding of the film layers onto the steel strip is effected by the rolls 7. After roll bonding, the laminated strip 10 passes through a secondary heating furnace 4 at a temperature of between about 200°C - 230°C to complete melting of the bonding layer. The reheating temperature is chosen to be sufficiently high to melt the bonding layer, but not high enough to melt the film. The elevated temperature of the strip is maintained in hot zone 4a for a period sufficiently long to complete the bonding process.

The laminated strip 10 then passes via an accumulator 12 to a coiler 14. Some means of forced cooling, e.g. a quenching tank 46, may be provided within the coating chamber 5.

Laminated strip produced by this method generally comprises a steel substrate of between 0.05 to 0.5m thickness, a transparent bonding layer of approximately 2 microns thickness, and a transparent polyethylene terephthalate layer of between 10 and 100 microns thickness, having a top coat of UV-cured resin between 1 and 5 microns in thickness. Thus, the polymer film acts as a corrosion barrier and the UV-cured resin becomes an integral part of the sheet, providing a scratch-resistant surface.

## Claims

1. A method for the manufacture of a high performance metallic material comprising;
(i) inductively heating a metallic substrate to between about 160°C and 210°C;
(ii) extruding a multi-layer composite film comprising a substantially transparent film and a bonding agent bottom layer with a UV-cured resin top layer.
(iii) applying the composite film of step (ii) to the heated product of step (i) under pressure sufficient to initiate bonding of the bonding agent to the coated surface of the steel substrate; and
(iv) reheating the product of step (iii) to between about 180°C and 240°C for a time period sufficient to substantially complete bonding of the bonding agent to the coated surface of the steel substrate.

2. A method as claimed in claim 1 wherein the UV-cured resin in step (ii) is an epoxy resin.

3. A method as claimed in claim 1 wherein the UV-cured resin is an acrylic resin.

4. A method as claimed in any one of claims 1 to 3 further comprising the step of adding an agent to the UV resin to improve scratch resistance of the cured UV resin.

5. A method as claimed in any one of claims 1 to 4 further comprising the step of adding a colorant to one or more of the components of the surface coating of step (ii).

6. A method as claimed in any one of claims 1 to 5 wherein the pressure is applied by means of a rubber nip roll.

7. A high performance metallic material comprising; a metallic substrate to which is bonded a surface coating comprising a UV-cured resin top surface, a substantially transparent film and a bonding agent bottom layer, the bottom layer being bonded to the surface of the metallic substrate.

8. A high performance metallic material as claimed in claim 7 wherein the UV-cured resin contains an agent for providing improved scratch resistance in the cured resin.

9. A high performance metallic material as claimed in claim 7 or claim 8 wherein the UV-cured resin is an epoxy resin.

10. A high performance metallic material as claimed in any one of claims 7 to 9 wherein the UV-cured resin is an acrylic resin.

11. A high performance metallic material as claimed in any one of claims 7 to 10 wherein the substantially transparent film comprises polyethylene terephthalate.

12. A high performance metallic material as claimed in any one of claims 7 to 11 wherein the bonding agent is a co-extruded polyester co-polymer.

13. A method for the manufacture of a high performance metallic material substantially as described herein.

14. A high performance metallic material substantially as described herein.
